# EUROPÄISCHE PATENTSCHRIFT

(11) **EP 0 419 966 B1**
(45) Veröffentlichungstag und Bekanntmachung des Hinweises auf die Patenterteilung: **23.04.1997**
(21) Anmeldenummer: 90117727.9
(22) Anmeldetag: 14.09.1990
(51) Int. Cl.: C08J 9/16, C08L 25/04, C08L 51/08

(54) **Wärmeformbeständige expandierbare Styrolpolymerisate mit hoher Expandierbarkeit**
Heat resistant expansible styrene polymer with high expansibility
Polymères styréniques expansibles, resistant à la chaleur, et à haute expansibilité

(30) Priorität: 23.09.1989 DE 3931862
(43) Veröffentlichungstag der Anmeldung: 03.04.1991
(73) Patentinhaber: BASF Aktiengesellschaft, 67063 Ludwigshafen (DE)
(72) Erfinder: Hahn, Klaus, Dr., D-6719 Kirchheim (DE); Guhr, Uwe, Dr., D-6718 Gruenstadt (DE); Hintz, Hans, Dr., D-6700 Ludwigshafen (DE); Wittenberg, Dietmar, Dr., D-6800 Mannheim 1 (DE)

(56) Entgegenhaltungen:
- EP-A- 0 241 258
- EP-A- 0 294 783
- EP-A- 0 383 133
- EP-A- 0 410 302
- DE-A- 3 234 660
- GB-A- 986 035

## Beschreibung

Schaumstoffe auf der Basis eines Gemisches aus Polystyrol und einem Polymeren mit hoher Erweichungstemperatur zeigen gegenüber Polystyrolschaumstoffen eine wesentlich höhere Wärmeformbeständigkeit. Derartige Produkte haben jedoch bisher keine größere technische Bedeutung erlangt, da wirtschaftliche Verfahren zur Herstellung der für die Schaumstoff-Formteil-Herstellung benötigten entsprechenden expandierbaren Styrolpolymerisate nicht bekannt waren und diese sich zudem durch eine unbefriedigende Expandierbarkeit auszeichneten.

Aufgabe der Erfindung war es, expandierbare Styrolpolymerisate zu entwickeln, die für die Herstellung von wärmeformbeständigen Schaumstoffen geeignet sind, und die sich durch hohe Expandierbarkeit auszeichnen.

überraschenderweise wurde gefunden, daß diese Aufgabe gelöst wird durch treibmittelhaltige Mischungen aus Polystyrol und einem styrollöslichen Polymeren mit einer hohen Erweichungstemperatur, wenn die treibmittelfreie Mischung der Polymeren einen Schmelzindex MFI 200/5 zwischen 15 und 20 aufweist. Derartige Mischungen lassen sich in einfacher Weise durch Suspensionspolymerisation einer Lösung des Polymeren mit hoher Erweichungstemperatur in Styrol in Gegenwart eines Reglers erhalten.

Gegenstand der Erfindung sind somit expandierbare Styrolpolymerisate enthaltend
a) 80 bis 99 Gew.-% Polystyrol
b) 1 bis 20 Gew.-% eines styrollöslichen Polymeren mit einer Erweichungstemperatur oberhalb von 140°C,
c) 3 bis 10 Gew.-%, bezogen auf die Summe von a) und b) eines C₃- bis C₆-Kohlenwasserstoffs als Treibmittel, und gegebenenfalls
d) übliche Zusatzstoffe in wirksamen Mengen.
wobei die Mischung der Komponenten a) und b) einen Schmelzindex MFI 200/5 zwischen 15 und 30 aufweist.

Gegenstand der Erfindung ist ferner ein Verfahren zur Herstellung derartiger expandierbarer Styrolpolymerisate, dadurch gekennzeichnet, daß man die Komponente b) in Styrol löst, in wäßriger Suspension in Gegenwart von 0,01 bis 3 Gew.-%, bezogen auf Styrol, eines üblichen Reglers mit einer Kettenübertragungskonstante K zwischen 0,1 und 50 polymerisiert und vor, während oder nach der Polymerisation das Treibmittel und gegebenenfalls die Zusatzstoffe zufügt.

Gegenstand der Erfindung sind weiterhin Schaumstoffe der Dichte 0,005 bis 0,1 g/cm³, enthaltend
a) 80 bis 99 Gew.-% Polystyrol
b) 1 bis 20 Gew.-% eines styrollöslichen Polymeren mit einer Erweichungstemperatur oberhalb von 140°C,
und gegebenenfalls übliche Zusatzstoffe in wirksamen Mengen, wobei die Mischung der Komponenten a) und b) einen Schmelzindex MFI 200/5 zwischen 15 und 30 aufweist.

überraschenderweise weisen die aus den neuen expandierbaren Styrolpolymerisaten hergestellten Schaumstoffe eine hohe Dimensionsstabilität auch bei höheren Temperaturen auf.

Als Hauptkomponente a) enthalten die neuen Produkte 80 bis 99, vorzugsweise 75 bis 98, insbesondere 90 bis 97 Gew.-% Polystyrol.

Die neuen Produkte enthalten ferner als Komponente b) 1 bis 20, vorzugsweise 2 bis 15, insbesondere 3 bis 10 Gew.-% eines styrollöslichen Polymeren mit einer Erweichungstemperatur oberhalb von 140°C, vorzugsweise zwischen 150°C und 210°C , insbesondere zwischen 160 und 200°C.

Diese Polymeren sollen eine ausreichende Löslichkeit in Styrol aufweisen, so daß die zur Herstellung der neuen Produkte benötigte Menge der Komponente b) in der entsprechenden Menge Styrol gelöst werden kann. Geeignete Polymere sind beispielsweise Poly-1,4-phenylensulfid (Erweichungstemperatur 190°C), Poly-(2,6-dimethyl)-1,4-phenylenether (Erweichungstemperatur 200°C) sowie Styrol-Maleinsäure(anhydrid)copolymere mit einem Maleinsäure- bzw. Maleinsäureanhydridgehalt von 10 bis 49 Gew.-% (Erweichungstemperatur 150 bis 170°C).

Erfindungswesentlich ist es, daß die treibmittelfreie Mischung der Komponenten a) und b) einen Schmelzindex MFI 200/5 (nach DIN 53 735) zwischen 15 und 30, insbesondere zwischen 17 und 28 aufweist. Liegt der Schmelzindex unter 15, so ist die Expandierbarkeit unbefriedigend, liegt der Wert über 30, so ist die Dimensionsstabilität der daraus hergestellten Schaumstoffe unbefriedigend.

Die expandierbaren Styrolpolymerisate enthalten als Treibmittel 3 bis 10, vorzugsweise 4 bis 9 und insbesondere 5 bis 8 Gew.-%, bezogen auf die Summe von a) und b) eines C₃- bis C₆-Kohlenwasserstoffs, wie Propan, Butan, Isobutan, n-Pentan, i-Pentan, Neopentan und/oder Hexan. Vorzugsweise wird ein handelsübliches Pentan-Gemisch verwendet.

Die Polystyrolteilchen können auch Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z. B. Glycerinester oder Hydroxycarbonsäureester. Die Zusatzstoffe können je nach der beabsichtigten Wirkung in den Teilchen homogen verteilt oder als Oberflächenbeschichtung vorliegen.

Als Zusatzstoffe sind auch styrollösliche Styrol-Acrylnitril-Copolymere geeignet, die in geringen Mengen zu einer Schrumpffreiheit der Schaumstoffe führen. Erhöht man die Zusatzmenge, so zeichnen sich die Schaumstoffe durch eine hohe Ölbeständigkeit aus.

Die expandierbaren Styrolpolymerisate sind gekennzeichnet durch ein hohes Expandiervermögen E zwischen 30 und 80, vorzugsweise zwischen 40 und 80 und insbesondere zwischen 50 und 80, wobei E das Verhältnis der Schüttdichte der expandierbaren Perlen zur Schüttdichte der durch Dampfbehandlung (6 min bei 120°C) erhaltenen Schaumstoffperlen bedeutet.

Die expandierbaren Styrolpolymerisate zeichnen sich weiterhin dadurch aus, daß das Verhältnis des Expandiervermögens E zur Treibmittelmenge M (=Mol Treibmittel pro kg Styrolpolymerisat) zwischen 30 und 80, vorzugsweise zwischen 40 und 80, insbesondere zwischen 50 und 75 liegt. Die neuen Produkte tragen somit zur Entlastung der Umwelt bei, da zur Erzielung der gleichen Dichte wesentlich geringere Treibmittelmengen als nach dem Stand der Technik benötigt werden.

Nach einem bevorzugten Verfahren werden die erfindungsgemäßen treibmittelhaltigen Styrolpolymerisate hergestellt durch Polymerisation einer Lösuung der Komponente b) in Styrol in wäßriger Suspension, wobei vor, während oder nach der Polymerisation die oben beschriebenen Treibmittel und gegebenenfalls die Zusatzstoffe zugesetzt werden. Es ist auch möglich, Mischungen aus der Komponente b) mit Polystryrol, wie sie z.T. handelsüblich sind, in Styrol aufzulösen. Während der Polymerisation, vorteilhaft bei einem Styrol-Umsatz zwischen 20 und 90 %, werden 0,01 bis 3 Gew.-%, vorzugsweise 0,05 bis 2 Gew.-%, insbesondere 0,1 bis 1 Gew.-% eines üblichen, vorzugsweise bromfreien Reglers mit einer Kettenübertragungskonstanten K zwischen 0,1 und 50 zugegeben.

Die Suspensionspolymerisation von Styrol ist an sich bekannt. Sie ist ausführlich beschrieben im Kunststoff-Handbuch, Band V. = Polystyrol = Carl Hanser-Verlag, Seiten 679 bis 688. Dabei wird Styrol in Wasser suspendiert, wobei übliche organische oder anorganische Suspensionsstabilisatoren, vorzugsweise in Mengen zwischen 0,05 und 2 Gew.%, bezogen auf die Suspension, zugesetzt werden. Die Polymerisation wird im allgemeinen bei einer Temperatur zwischen 80 und 130°C, vorzugsweise zwischen 100 und 120°C ausgeführt. Zum Start der Polymerisation werden organische Polymerisationsinitiatoren, z. B. Peroxide oder Azoverbindungen verwendet, die unter dem Einfluß der Wärme in Radikale zerfallen. Sie werden in Mengen von 0,01 bis 1 Gew.%, bezogen auf die Monomeren, eingesetzt. Die Kettenüberträger werden dem Polymerisationsansatz im allgemeinen bei einem Umsatz zwischen 20 und 90 %, vorzugsweise zwischen 40 und 60 % zugesetzt. Unter Umsatz ist der prozentuale Anteil der polymerisierten Monomeren, bezogen auf die gesamten eingesetzten Monomeren, zu verstehen. Er kann beispielsweise dadurch gemessen werden, daß man die Polymerisation nach einer gewissen Zeit abbricht, z. B. durch Zusatz von Inhibitoren, und die Menge der nicht polymerisierten Monomeren bestimmt.

Es werden Kettenüberträger mit einer übertragungskonstanten K (nach Vollmert, Grundriß der Makromolekularen Chemie, Springer Verlag 1962, Seiten 52 und 71) zwischen 0,1 und 50, bevorzugt zwischen 1 und 30, verwendet. In Frage kommen beispielsweise:

| | |
|---|---|
| n-Dodecylmercaptan | (K = 19) |
| tert.-Dodecylmercaptan | (K = 3) |
| n-Butylmercaptan | (K = 22) |
| tert.-Butylmercaptan | (K = 3,6) |
| Pentaphenylethan | (K = 2,0) |
| dimeres α-Methylstyrol | (K = 0,5) |

Der Gehalt an Styrol in den expandierbaren Styrolpolymerisaten sollte im allgemeinen niedrig sein und üblicherweise weniger als 0,2 Gew.%, vorzugsweise weniger als 0,1 Gew.%, insbesondere weniger als 0,08 Gew.% betragen. Zur Erreichung dieses Ziels ist es zweckmäßig, bei Verwendung von Mercaptanen als Regler, diese erst während der Polymerisation bei einem Umsatz zwischen 20 und 90 % zuzufügen.

Die erfindungsgemäßen treibmittelhaltigen Styrolpolymerisat-Teilchen sind perlförmig und haben im allgemeinen einen Durchmesser zwischen 0,2 und 4 mm. Sie können nach üblichen Methoden, z. B. mit Wasserdampf bei Temperaturen oberhalb des Erweichungspunkts zu Schaumstoffteilchen mit einem Durchmesser zwischen 0,5 und 2 cm und einer Dichte zwischen 0,005 und 0,1 g/cm³ vorgeschäumt werden. Es zeigt sich, daß dabei der Durchsatz durch die zudosierten Kettenüberträger erheblich erhöht wird.

Die vorgeschäumten Teilchen können dann nach üblichen Verfahren, d.h. durch Erhitzen in nicht gasdicht schließenden Formen, zu Schaumstoff-Formteilen mit einem Raumgewicht von 0,005 bis 0,1 g/cm³ ausgeschäumt werden.

Der Zusatz von Kettenüberträgern beeinflußt das Molekulargewicht und die Molekulargewichtsverteilung der entstehenden Polymeren, und damit auch deren rheologische Eigenschaften, die ihrerseits für die Expandierbarkeit der treibmittelhaltigen Polystyrolteilchen und die Dimensionsstabilität von daraus hergestellten Schaumstoff-Formkörpern verantwortlich sind. So führt z. B. eine Erniedrigung der Dehnviskosität zu besserer Expandierbarkeit und eine Absenkung der reversiblen Dehnung bei gleicher Dehnviskosität zu besserer Dimensionsstabilität. Beide Eigenschaften können an den treibmittelhaltigen Styrolpolymerisat-Teilchen direkt nach einer Vorschrift in "Prüfung hochpolymerer Werkstoffe" Carl Hanser Verlag Wien, 1977, Seite 422, gemessen werden. Die erfindungsgemäßen Produkte haben - gemessen nach der beschriebenen Methode - im allgemeinen eine Dehnviskosität von weniger als 4,2·10⁶ [Pas], vorzugsweise von 1,5 bis 3,0·10⁶ [Pas] und eine reversible Dehnung von weniger als 0,95, vorzugsweise von 0,6 bis 0,9.

Die neuen Schaumstoffe zeichnen sich durch eine hohe Wärmeformbeständigkeit aus. Sie sind im allgemeinen auch bei Temperaturen oberhalb von 100°C, je sogar bis zu 120°C dimensionsstabil.

Die in den Beispielen genannten Teile sind Gewichtsteile.

### Beispiel 1 bis 29

### 1. Polymerisation

In einem druckfesten Rührkessel wurde eine Mischung aus 200 Teilen Wasser, 0,1 Teilen Natriumpyrophosphat, 0,15 Teilen tert.Butylperbenzoat, 0,45 Teilen Benzoylperoxid, 100 Teilen einer styrolischen Lösung, die die in der Tabelle angeführten Mengen an Styrol, Polystyrol, des Polymeren b), und Divinylbenzol als Regler enthält, 7 Teilen Pentan und 3 Teilen einer 10%igen wäßrigen Lösung von Polyvinylpyrrolidon unter Rühren auf 90°C erhitzt, 5 Stunden bei 90°C gehalten und anschließend 2 Stunden bei 100°C und weitere 2 Stunden auf 120°C erhitzt. Als Regler wurde tert.-Dodecylmercaptan verwendet. Die Zugabe erfolgte in den in der Tabelle angeführten Mengen, bezogen auf die styrolische Lösung und zu dem in der Tabelle angeführten Dosierzeitpunkt.

Nach dem Abkühlen wurde das erhaltene Perlpolymerisat mit einem mittleren Perlendurchmesser von 0,8 mm von der wäßrigen Phase abgetrennt, gewaschen und getrocknet.

### 2. Produkteigenschaften

a) Schmelzindex
   Der Schmelzindex MFI 200/5 wurde nach der Vorschrift DIN 53 735 an einer von Treibmittel befreiten, entgasten Probe bestimmt.
b) Molekulargewichtsmessung
   Die mittleren Molekulargewichte M_{w} (Gewichtsmittel) und die Molekulargewichtsverteilung wurden nach der GPC-Methode unter Verwendung von Polystyrol als Standard bestimmt. Dabei wurde eine Säulenkombination zusammengestellt, die sowohl im niedermolekularen wie im hochmolekularen Bereich eine möglichst optimale Auftrennung gewährleistet.
   Die Säulenkombination besteht aus 5 hintereinandergeschalteten Säulen. Bei einer Einzellänge von je L = 300 und einem Innendurchmesser D = 10 mm wurden folgende Silica-Säulen verwendet:
   1 x Si 60
   1 x Si 100
   1 x Si 300
   1 x Si 1000.

   Das Füllmaterial sind LiChrospher und LiChrosorb der Fa. Merck (Silicagele) mit einer Korngröße von 10 µm (Ausnahme Si 60 = LiChrosorb).
   Der Durchfluß beträgt 2,8 ml/min. Das Lösungsmittel ist Tetrahydrofuran. Es wurden von einer 0,5%igen Lösung 200 µl bei Zimmertemperatur eingespritzt. Als Detektor ist ein Differentialrefraktometer der Fa. Knauer. Dual-Detektor Typ 61.00 eingebaut. Zur Kontrolle der gleichmäßigen Durchflußgeschwindigkeit wird ein Tropfenzähler verwendet.
   Zur Umrechnung der dabei erhaltenen Meßwerte auf das Molekulargewicht wird parallel aus 12 engverteilten Polystyrolproben der Fa. Pressure Chemical Co. mit bekanntem Molekulargewicht eine Eichkurve erstellt.
   Zur Standardisierung der verwendeten Säulenkombination wird die vom National Bureau of Standards charakterisierte breite Polystyrolprobe Nr. 706 gemessen. Dabei ergaben sich folgende Mittelwerte für das Molekulargewicht dieser Polystyrolprobe:
   M = 74.000
   M_{w} = 243.000
   M_{z} = 392.000

   Die erfindungsgemäßen Produkte weisen im allgemeinen ein mittlerese Molekulargewicht M_{w} von mehr als 60·10³ und weniger als 180·10³, vorzugsweise zwischen 100·10³ und 180·10³, insbesondere zwischen 120·10³ und 175·10³ auf. Die Steilheit der hochmolekularen Flanke der Molgewichtsverteilungskurve wird durch die Differenz der Mittelwerte M_{z+1}-M_{z} charakterisiert, wie sie bei H.G. Elias, Makromoleküle, Hüttig-Verlag 1971, Seiten 52 und 64 beschrieben ist. Bei den erfindungsgemäßen Produkten liegt der Wert für M_{z+1}-M_{z} im allgemeinen bei Werten unterhalb von 160·10³, vorzugsweise unterhalb von 150·10³, insbesondere unterhalb von 130·10³.
c) Schüttdichte
   Zur Untersuchung der Schüttdichte als Maß für die Expandierbarkeit (6 Min. 120°C) diente ein mit einem Metallrahmen eingefaßtes Sieb (Maschenweite: 0,1 - 0,2 mm) mit den Abmessungen 1000 x 800 x 250 mm, welches sich in einem abgeschlossenen Metallgehäuse mit Dampfzuleitung und Dampfabzugsvorrichtung befand.
   Der Wasserdampf von 120°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min. vorgeheizt. Anschließend wurden 100 g der expandierbaren Perlpolymerisate auf dem Drahtgewebe gleichmäßig verteilt, die Apparatur geschlossen und das Dampfventil geöffnet. Nach 6 min. wurde das Dampfventil wieder geschlossen und das Metallgehäuse geöffnet. Von dem vorgeschäumten Material wurde anschließend die Schüttdichte bestimmt.
d) Durchsatz beim Vorschäumen
   Die mit 0,4 Gew.-Teilen Glycerinmonostearat beschichteten Perlpolymeriate wurden in einem kontinuierlichen Rührvorschäumer, Typ Rauscher, mit strömendem Wasserdampf auf ein Schüttgewicht von 15 g/l vorgeschäumt und der Durchsatz bestimmt.
e) Wärmeformbeständigkeit
   Die vorgeschäumten Schaumstoffpartikel wurden nach 24 Stunden Zwischenlagerung in einer Blockform, Typ Rauscher, durch Bedampfung mit Wasserdampf und einem Druck von 1,8 bar zu einem Block der Dichte 15 g/l verschweißt.
   Die Bestimmung der Wärmeformbeständigkeit erfolgte an Proben des Schaumstoffblocks nach DIN 53 424 ("Bestimmung der Formbeständigkeit in der Wärme bei Biegebeanspruchung und bei Druckbeanspruchung").

Die Ergebnisse sind in der Tabelle zusammengefaßt.

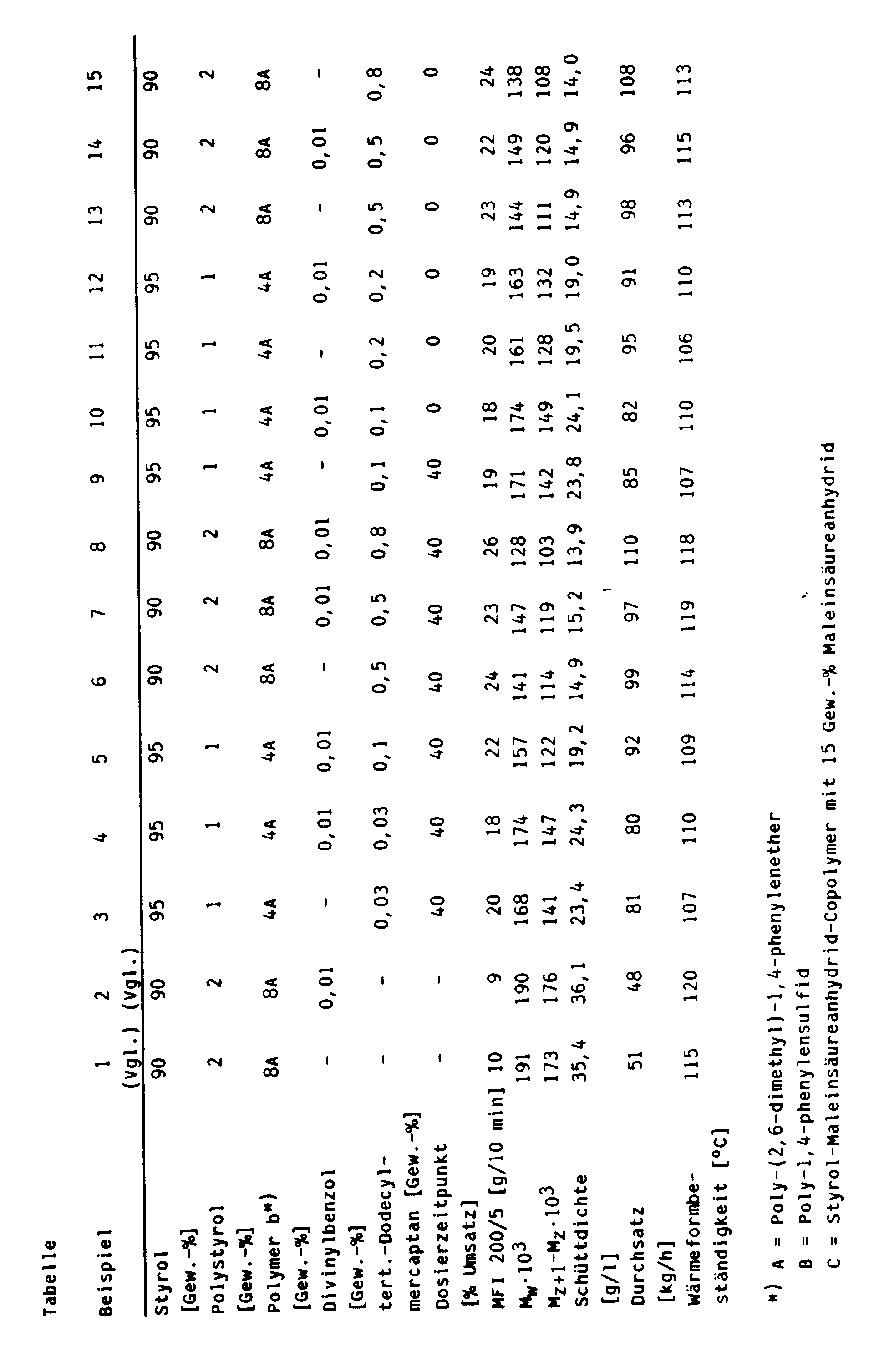

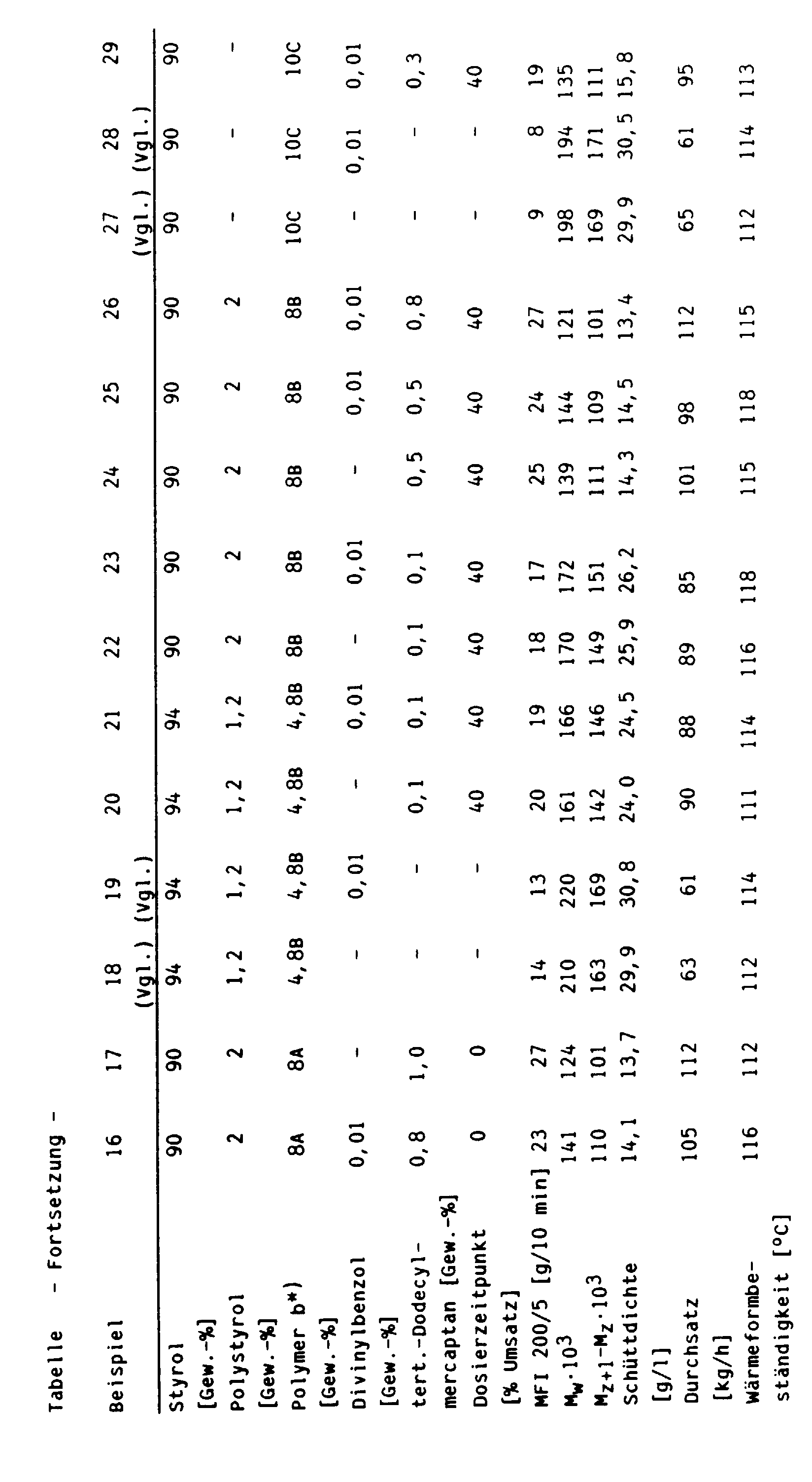

## Patentansprüche

1. Expandierbare Styrolpolymerisate, enthaltend
a) 80 bis 99 Gew.-% Polystyrol
b) 1 bis 20 Gew.-% eines styrollöslichen Polymeren mit einer Erweichungstemperatur oberhalb von 140°C,
c) 3 bis 10 Gew.-%, bezogen auf die Summe von a) und b) eines C₃-bis C₆-Kohlenwasserstoffs als Treibmittel, und gegebenenfalls
d) übliche Zusatzstoffe in wirksamen Mengen.
wobei die Mischung der Komponenten a) und b) einen Schmelzindex MFI 200/5 nach DIN 53 735 zwischen 15 und 30 aufweist.

2. Expandierbare Styrolpolymerisate gemäß Anspruch 1, dadurch gekennzeichnet, daß sie als Komponente b) 1 bis 20 Gew.-% Poly-1,4-phenylensulfid enthalten.

3. Expandierbare Styrolpolymerisate gemäß Anspruch 1, dadurch gekennzeichnet, daß sie als Komponente b) 1 bis 20 Gew.-% Poly-(2,6-dimethyl)1,4-phenylenether enthalten.

4. Expandierbare Styrolpolymerisate gemäß Anspruch 1, dadurch gekennzeichnet, daß sie als Komponente b) 1 bis 20 Gew.-% eines Styrol-Maleinsäure(anhydrid)-Copolymeren mit einem Maleinsäure(anhydrid)gehalt von 10 bis 49 Gew.-% enthalten.

5. Verfahren zur Herstellung expandierbarer Styrolpolymerisate gemäß Anspruch 1, dadurch gekennzeichnet, daß man die Komponente b) in Styrol löst, in wäßriger Suspension in Gegenwart von 0,01 bis 3 Gew.-% bezogen auf Styrol, eines üblichen Reglers mit einer Kettenübertragungskonstante K zwischen 0,1 und 50 polymerisiert und vor, während oder nach der Polymerisation das Treibmittel und gegebenenfalls die Zusatzstoffe zufügt.

6. Schaumstoffe der Dichte 0,005 bis 0,1 g/cm³, enthaltend
a) 80 bis 99 Gew.-% Polystyrol
b) 1 bis 20 Gew.-% eines styrollöslichen Polymeren mit einer Erweichungstemperatur oberhalb von 140°C,
und gegebenenfalls übliche Zusatzstoffe in wirksamen Mengen, wobei die Mischung der Komponenten a) und b) einen Schmelzindex MFI 200/5 nach DIN 53 735 zwischen 15 und 30 aufweist.

7. Verfahren zur Herstellung von Schaumstoffen gemäß Anspruch 6, dadurch gekennzeichnet, daß man expandierbare Styrolpolymerisate gemäß Anspruch 1 in Partikelform durch Erhitzen auf eine Temperatur oberhalb des Erweichungspunktes expandiert und die erhaltenen Schaumstoffpartikel in nicht gasdicht schließenden Formen durch Erhitzen miteinander verschweißt.

## Claims

1. An expandable styrene polymer containing
a) from 80 to 99 % by weight of polystyrene,
b) from 1 to 20 % by weight of a styrene-soluble polymer having a softening point above 140°C,
c) from 3 to 10 % by weight, based on the sum of a) and b), of a C₃- to C₆-hydrocarbon as blowing agent, and, if desired,
d) conventional additives in effective amounts,
the mixture of components a) and b) having a melt flow index MFI 200/5 in accordance with DIN 53 735 of from 15 to 30.

2. An expandable styrene polymer as claimed in claim 1, containing, as component b), from 1 to 20 % by weight of poly-1,4-phenylene sulfide.

3. An expandable styrene polymer as claimed in claim 1, containing, as component b), from 1 to 20 % by weight of poly-(2,6-dimethyl)-1,4-phenylene ether.

4. An expandable styrene polymer as claimed in claim 1, containing, as component b), from 1 to 20 % by weight of a styrene-maleic acid (anhydride) copolymer containing from 10 to 49 % by weight of maleic acid (anhydride).

5. A process for the preparation of an expandable styrene polymer as claimed in claim 1, which comprises dissolving component b) in styrene, polymerizing the solution in aqueous suspension in the presence of from 0.01 to 3 % by weight, based on styrene, of a conventional regulator having a chain-transfer constant K of from 0.1 to 50, and adding the blowing agent and, if used, the additives before, during or after the polymerization.

6. A foam having a density of from 0.005 to 0.1 g/cm³ and containing
a) from 80 to 99 % by weight of polystyrene and
b) from 1 to 20 % by weight of a styrene-soluble polymer having a softening point above 140°C,
and, if desired, conventional additives in effective amounts, the mixture of components a) and b) having a melt flow index MFI 200/5 in accordance with DIN 53 735 of from 15 to 30.

7. A process for the preparation of a foam as claimed in claim 6, which comprises expanding an expandable styrene polymer as claimed in claim 1 in particle form by heating to above the softening point, and welding the resultant foam particles to one another by heating in a mold which does not close in a gas-tight manner.

## Revendications

1. Polymères du styrène expansibles, qui contiennent
a) 80 à 99% en poids de polystyrène,
b) 1 à 20% en poids d'un polymère soluble dans le styrène, d'une température de ramollissement supérieure à 140°C,
c) 3 à 10% en poids, par rapport à la somme de a) et de b), d'un hydrocarbure en C₃ à C₆ servant d'agent porogène et, éventuellement,
d) des additifs usuels en proportions actives, où le mélange des composants a) et b) possède un indice de fusion MFI 200/5 selon la norme DIN 53 735 compris entre 15 et 30.

2. Polymères du styrène expansibles suivant la revendication 1, caractérisés en ce qu'ils contiennent, à titre de composant b), de 1 à 20% en poids de poly(sulfure de 1,4-phénylène).

3. Polymères du styrène expansibles suivant la revendication 1, caractérisés en ce qu'ils contiennent, à titre de composant b), de 1 à 20% en poids de poly[éther-(2,6-diméthyl)-1,4-phénylénique].

4. Polymères du styrène expansibles suivant la revendication 1, caractérisés en ce qu'ils contiennent, à titre de composant b), de 1 à 20% en poids d'un copolymère du styrène et de l'acide maléique ou de l'anhydride maléique, d'une teneur en acide maléique ou anhydride maléique de 10 à 49% en poids.

5. Procédé de préparation de polymères du styrène expansibles suivant la revendication 1, caractérisé en ce que l'on dissout le composant b) dans du styrène, on le polymérise en suspension aqueuse en présence de 0,01 à 3% en poids, par rapport au styrène, d'un régulateur habituel, d'une constante de transfert de chaînes K comprise entre 0,1 et 50 et en ce que l'on ajoute l'agent porogène et éventuellement les additifs avant, pendant ou après la polymérisation.

6. Mousses ou matières expansées d'une masse volumique de 0,005 à 0,1g/cm³, qui contiennent
a) 80 à 99% en poids de polystyrène,
b) 1 à 20% en poids d'un polymère soluble dans le styrène, d'une température de ramollissement supérieure à 140°C,
et éventuellement des additifs usuels en proportions actives, où le mélange des composants a) et b) possède un indice de fusion MFI 200/5 selon la norme DIN 53 735 compris entre 15 et 30.

7. Procédé de fabrication de mousses ou de matières expansées suivant la revendication 6, caractérisé en ce que l'on provoque l'expansion de polymères du styrène expansibles suivant la revendication 1, sous forme particulaire par chauffage jusqu'à une température supérieure au point de ramollissement et on soude mutuellement les particules de mousse ou de matière expansée obtenues par chauffage dans des moules qui ferment de manière non étanche aux gaz.
